# EUROPEAN PATENT SPECIFICATION

(11) **EP 1 758 346 B1**
(45) Date of publication and mention of the grant of the patent: **27.05.2015**
(21) Application number: 06017782.1
(22) Date of filing: 25.08.2006
(51) Int. Cl.: H04M 1/02

(54) **Slide module for portable terminal**
Schiebevorrichtung für tragbares Kommunikationsendgerät
Module à glissières pour terminal portable

(30) Priority: 26.08.2005 KR 20050079077; 26.08.2005 KR 20050079081
(43) Date of publication of application: 28.02.2007
(73) Proprietor: LG Electronics Inc., Seoul 150-721 (KR)
(72) Inventor: Jung, Kyung-Sung, Dongjak-Gu Seoul (KR); Joo, Won-Seok, Seoul (KR)
(74) Representative: Urner, Peter

(56) References cited:
- EP-A1- 1 499 093
- EP-A1- 1 528 755
- WO-A2-2005/034485
- DE-U1- 20 317 865
- US-A1- 2004 137 940
- US-A1- 2005 104 856

## Description

### RELATED APPLICATION

The present disclosure relates to a subject matter contained in priority Korean Applications No. 10-2005-0079077 and No. 10-2005-79081 filed on August 26, 2005.

### BACKGROUND OF THE INVENTION

### 1. Field of the Invention

The present invention relates to a portable terminal having a slide module, and particularly, to a slide module of a portable terminal which is slidingly moved in horizontal and vertical directions.

### 2. Background of the Invention

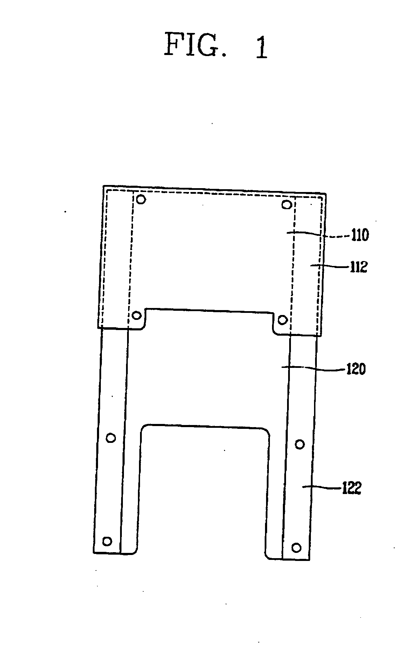

Fig. 1 is a front view illustrating a related art slide module.

A slide module according to the related art includes a first slide member 110 fixed to a first body (not shown), and a second slide member 120 fixed to a second body (not shown) and mounted at the first slide member 110 to be slidingly movable.

First slide rails 112 are formed at both edges of the first slide member 110 in its longitudinal direction. Second slide rails 122 which are inserted in the first slide rails 112 to be moved along the first slide rails 112 are formed at the second slide member 120.

Regarding the slide module having such construction, when moving a first body in its longitudinal direction, the first slide member 110 connected to the first body is slidingly moved in a longitudinal direction relative to the second slide member 120.

However, the slide module according to the related art having such construction implements such that the first slide member is slidingly moved only in the longitudinal direction, which can not meet various usage conditions.

EP 1 528 755 Al describes a spring module for a sliding-type portable terminal. Herein, a spring module in a sliding-type portable terminal has a first housing and a second housing. In a predetermined portion of the length of the first housing, the spring module applies an elastic force in a direction in which the second housing slides to cover the first housing. In the remaining portion of the length of the first housing, the spring module applies the elastic force in a direction in which the second housing slides to expose the first housing. As a consequence, the elastic force generated by the spring module provides for semiautomatic opening/closing of the sliding-type portable terminal.

### SUMMARY OF THE INVENTION

It is an object of the present invention to provide a slide module of a portable terminal which is capable of satisfying various usage conditions of the portable terminals by allowing a first body to be slidingly moved relatively in horizontal and vertical directions with respect to a second body without canting.

This object is solved by a slide module of a portable terminal according to claim 1. Further advantages, refinements and embodiments of the invention are described in the respective sub-claims.

In an example helpful for the understanding of the present invention there is provided a slide module comprising: a first slide member fixed to a first body; a second slide member fixed to a second body; and a guide unit disposed between the first slide member and the second slide member for guiding the first slide member to be slidingly moved in horizontal and vertical directions.

The guide unit may include a first vertical rail formed in a vertical direction of the first slide member, a first horizontal rail connected to the first vertical rail and formed in a horizontal direction of the first slide member, and a second guide protrusion formed at the second slide member to be supported by the first horizontal rail and the first vertical rail so as to be slidingly movable.

The guide unit may further include a second vertical rail formed in a vertical direction of the second slide member, a second horizontal rail connected to the second vertical rail and formed in a horizontal direction of the second slide member, and a first guide protrusion formed at the first slide member to be supported by the second horizontal rail and the second vertical rail to be slidingly movable.

The first vertical rail and the second vertical rail are respectively formed at edges of the first and second slide members in the vertical direction.

The first vertical rail and the second vertical rail are positioned at opposite edges to each other when arranging the first slide member and the second slide member to face each other.

The first horizontal rail and the second horizontal rail are respectively formed at edges of the first and second slide members in the horizontal direction.

The first horizontal rail and the second horizontal rail are positioned at opposite edges to each other when arranging the first slide member and the second slide member to face each other.

The first guide protrusion is formed at a corner of the first slide member, and the second guide protrusion is mounted at a corner of the second slide member.

The first guide protrusion and the second guide protrusion are positioned in a diagonal direction of each other when arranging the first slide member and the second slide member to face each other.

In an embodiment of the present invention, the guide unit includes a first guide rail formed at the first slide member, a second guide rail formed at the second slide member, a first guide member formed at the first slide member and inserted in the second guide rail so as to be slidingly movable, and a second guide member formed at the second slide member and inserted in the first guide rail so as to be slidingly movable.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:
Fig. 1 is a front view illustrating a related art slide module;
Fig. 2 is a perspective view illustrating a state that a portable terminal is opened in a vertical direction in accordance with an example helpful for the understanding of the present invention;
Fig. 3 is a perspective view illustrating a state that a portable terminal is opened in a horizontal direction in accordance with an example helpful for the understanding of the present invention;
Fig. 4 is a disassembled perspective view illustrating a slide module in accordance with an example helpful for the understanding of the present invention;
Fig. 5 is a perspective view illustrating a state that a slide module is moved in a vertical direction in accordance with an example helpful for the understanding of the present invention;
Fig. 6 is a sectional view taken along the line A-A of Fig. 5;
Fig. 7 is a perspective view illustrating a state that a slide module is moved in a horizontal direction in accordance with an example helpful for the understanding of the present invention;
Fig. 8 is a disassembled perspective view illustrating a slide module in accordance with an embodiment of the present invention;
Fig. 9 is a perspective view illustrating a state that a slide module is moved in a vertical direction in accordance with the embodiment of the present invention; and
Fig. 10 is a perspective view illustrating a state that a slide module is moved in a horizontal direction in accordance with the embodiment of the present invention.

### DETAILED DESCRIPTION OF THE INVENTION

Description will now be given in detail of the present invention, with reference to the accompanying drawings.

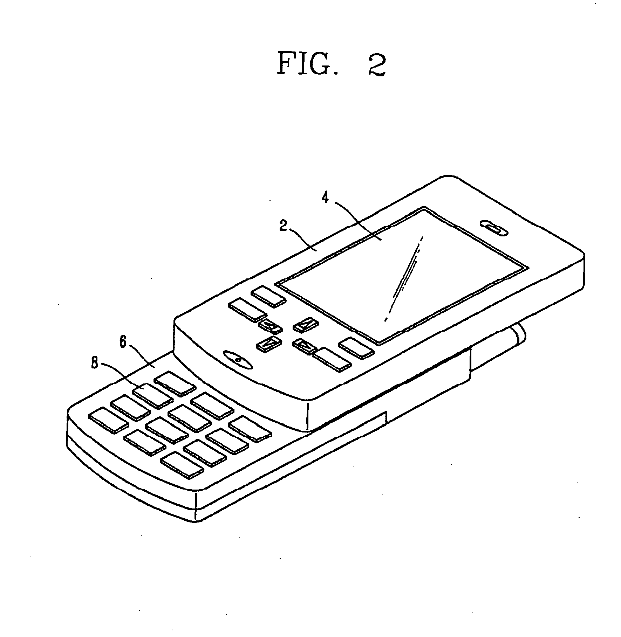

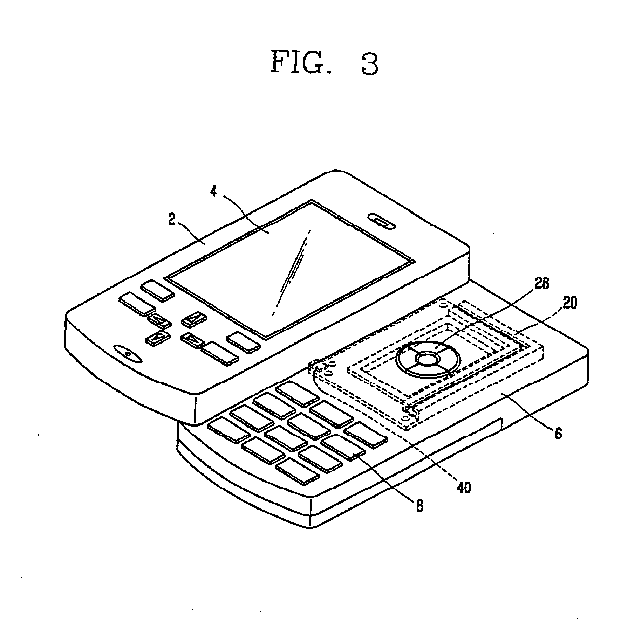

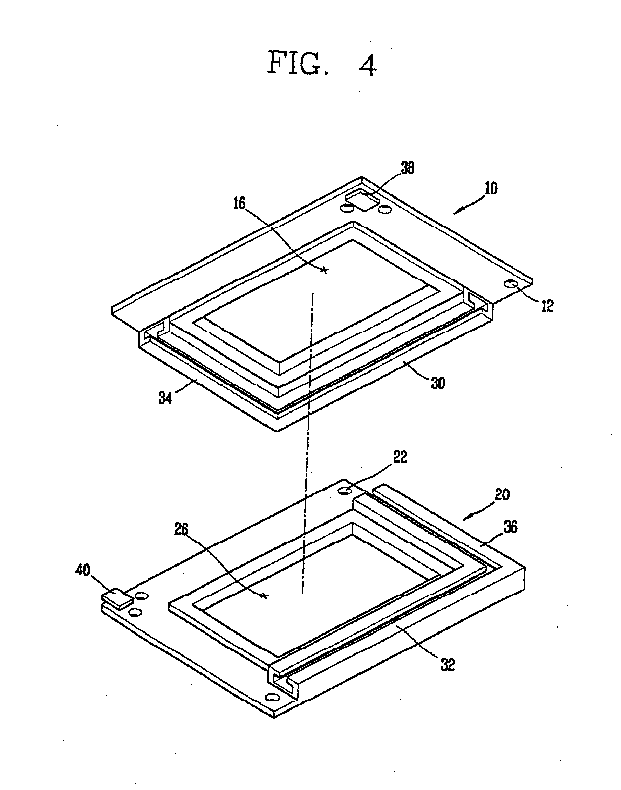

Fig. 2 is a perspective view illustrating a state that a portable terminal is opened in a vertical direction in accordance with an example helpful for the understanding of the present invention, Fig. 3 is a perspective view illustrating a state that a portable terminal is opened in a horizontal direction in accordance with an example helpful for the understanding of the present invention, and Fig. 4 is a disassembled perspective view illustrating a slide module in accordance with an example helpful for the understanding of the present invention.

A portable terminal may include a first body 2 having a display 4, a second body 6 connected to the first body 2 to be slidingly moved in a horizontal direction and a vertical direction and having a keypad 8, and a slide module disposed between the first body 2 and the second body 6 to guide the first body 2 to be slidingly moved in the horizontal direction and the vertical direction.

The slide module is constituted with a first slide member 10 fixed to the first body 2, a second slide member 20 fixed to the second body 6, and a guide unit formed between the first slide member 10 and the second slide member 20, to guide the first slide member 10 to be slidingly moved in a horizontal direction with respect to the second slide member 20 and also to guide the first slide member 10 to be slidingly moved in the vertical direction with respect to the second slide member 20.

The first slide member 10 is formed in a plate shape. Bolt coupling holes 12 for coupling the first slide member 10 to the first body 2 with bolts are formed in edges of the first slide member 10, which allows the first slide member 10 to be mounted in a rear surface of the first body 2. An opening 16 is formed through the center of the first slide member 10.

The second slide member 20 is arranged to face the first slide member 10. Bolt coupling holes 22 for coupling the second slide member 20 to the second body 6 are formed in edges of the second slide member 20, which allows the second slide member 20 to be mounted in a front surface of the second body 6. An opening 26 is formed through the second slide member 20.

When the second slide member 20 is mounted in the front surface of the second body 6, keys 28 for inputting information, a display, or the like can be disposed in the opening 26.

The guide unit may include vertical rails 30 and 32 respectively formed at the first and second members 10 and 20 in vertical directions, horizontal rails 34 and 36 respectively connected to the vertical rails 30 and 32 and respectively formed at the first and second slide members 10 and 20 in horizontal directions, and guide protrusions 38 and 40 to be respectively mounted at the first and second slide members 10 and 20 respectively supported by the vertical rails 30 and 32 and the horizontal rails 34 and 36 so as to be slidingly movable.

The vertical rails 30 and 32 include the first rail 30 arranged at an edge of one side of the first slide member 10 in the vertical direction, and the second vertical rail 32 arranged at an edge of one side of the second slide member 20 in the vertical direction.

Here, when arranging the first slide member 10 and the second slide member 20 to face each other, the first vertical rail 30 and the second vertical rail 32 are positioned (arranged) at opposite edges to each other.

Each of the vertical rails 30 and 32 has a width in which each of the guide protrusion 38 and 40 can be inserted. Both ends thereof are perpendicularly extended to have a certain height and thereafter the ends of the extended portion is curved in an inner direction. Accordingly, each of the guide protrusions 38 and 40 can be prevented from being separated from each of the vertical rails 30 and 32.

The horizontal rails 34 and 36 include the first horizontal rail 34 formed at the edge of the horizontal direction of the first slide member 10, and the second horizontal rail 36 formed at the edge of the horizontal direction of the second slide member 20.

Here, when arranging the first slide member 10 and the second slide member 20 to face each other, the first horizontal rail 34 and the second horizontal rail 36 are positioned (arranged) at opposite edges to each other.

The first and second horizontal rails 34 and 36 are extended from the first and second vertical rails 30 and 32, and have the same shapes as those of the first and second vertical rails 30 and 32.

The guide protrusions 38 and 40 include the first guide protrusion 38 protruded from the corner of the first slide member 20 and supported by the second vertical rail 32 and the second horizontal rail 36 formed at the second slide member 20 so as to be slidingly movable, and the second guide protrusion 40 protruded from the corner of the second slide member 20 and supported by the first vertical rail 30 and the first horizontal rail 34 of the first slide member 10 so as to be slidingly movable.

Here, when arranging the first slide member 10 and the second slide member 20 to face each other, the first guide protrusion 38 and the second guide protrusion 40 are positioned in the diagonal direction of each other.

The guide protrusions 38 and 40 are formed in a rectangular shape, and thus both side surfaces of each guide protrusion 38 and 40 are horizontal to each other. That is, when the guide protrusions 38 and 40 are inserted in the vertical rails 30 and 32 and the horizontal rail 34 and 36 to thusly be slidingly moved, the guide protrusions 38 and 40 are slidingly moved in a state that the both side surfaces of each of the guide protrusions 38 and 40 are in contact with both inner walls of each of the rails 30, 32, 34 and 36, resulting in preventing the first slide member 10 and the second slide member 20 from being mis-aligned to each other.

An operation of the slide module in accordance with the one example helpful for the understanding of the present invention having the construction will now be explained.

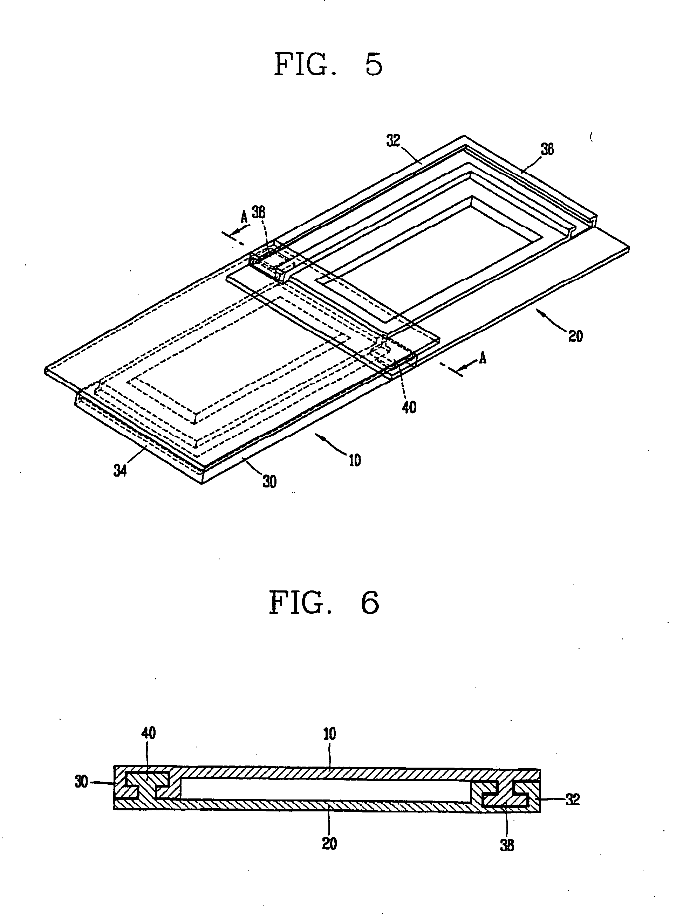

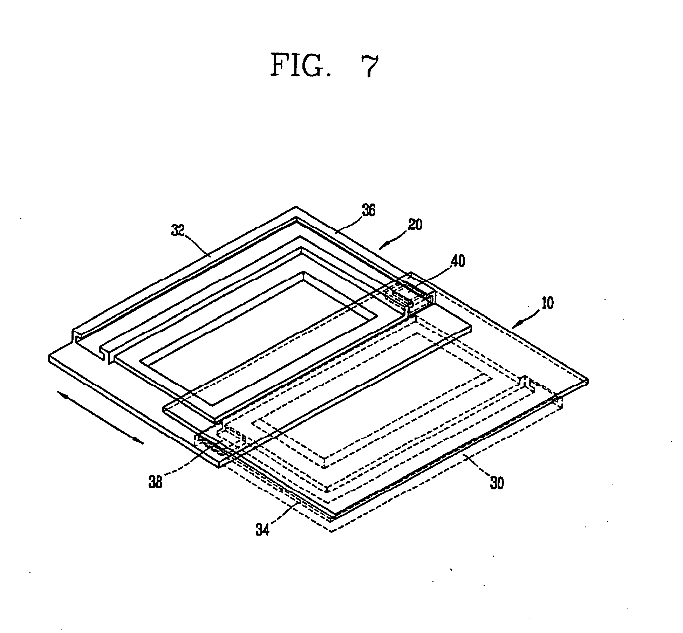

Fig. 5 is a perspective view illustrating a state that a slide module is moved in a vertical direction in accordance with an example helpful for the understanding of the present invention, Fig. 6 is a sectional view taken along the line A-A of Fig. 5, and Fig. 7 is a perspective view illustrating a state that a slide module is operated in a horizontal direction in accordance with an example helpful for the understanding of the present invention.

Concerning an assembly process of the first and second slide members 10 and 20, the second guide protrusion 40 formed at the second slide member 20 is supported by the first vertical rail 30 and the first horizontal rail 34 formed at the first slide member 10 so as to be slidingly movable. The first guide protrusion 38 formed at the first slide member 10 is supported by the second horizontal rail 36 and the second vertical rail 32 formed at the second slide member 20 so as to be slidingly movable. Accordingly, the first slide member 10 and the second slide member 20 are connected to each other in the vertical direction and the horizontal direction so as to be slidingly movable.

In this assembled state, when the first slide member 10 is relatively slide in the vertical direction with respect to the second slide member 20, the second guide protrusion 40 is slidingly moved along the first vertical rail 30 and the first guide protrusion 38 is slidingly moved along the second vertical rail 32, so as to guide the slide movement of the first slide member 10 in the vertical direction.

When the first slide member 10 is relatively slide in the horizontal direction with respect to the second slide member 20, the second guide protrusion 40 is slidingly moved along the first horizontal rail 34 and the first guide protrusion 38 is slidingly moved along the second horizontal rail 36, so as to guide the slide movement of the first slide member 10 in the horizontal direction.

Thus, the guide unit constituted with the one pair of guide protrusions 38 and 40 can allow the first slide member 10 to be slidingly moved more safely and accurately.

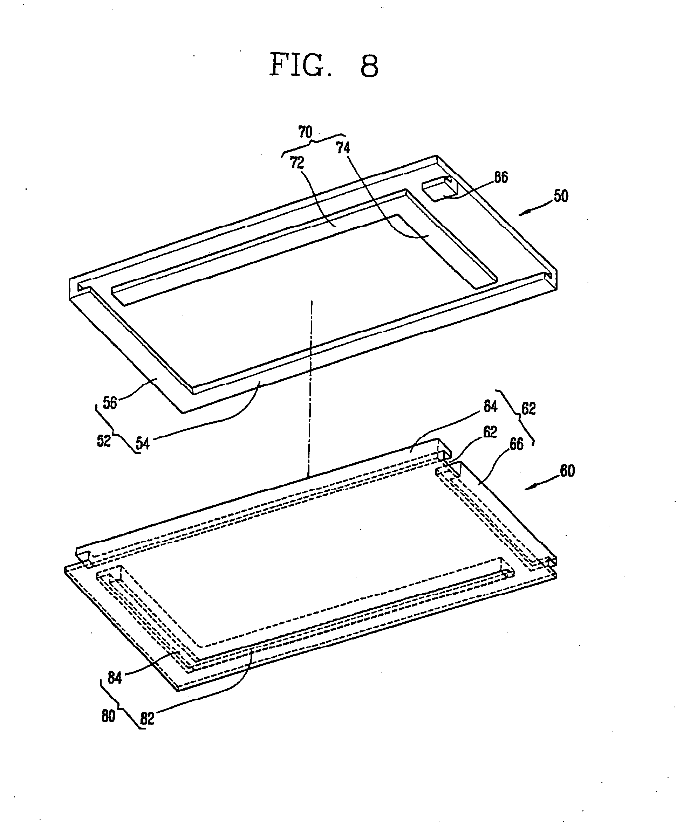

Fig. 8 is a disassembled perspective view illustrating a slide module in accordance with an embodiment of the present invention.

A slide module according to an embodiment of the present invention may include a first slide member 50 fixed to the first body 2, a second slide member 60 fixed to the second body 6, and a guide unit disposed between the first slide member 50 and the second slide member 60 to guide the first slide member 50 to be slidingly moved in a vertical direction with respect to the second slide member 60 and also to guide the first slide member 50 to be slidingly moved in a horizontal direction with respect to the second slide member 60.

The guide unit may include a first guide rail 52 formed at the first slide member 50, a second guide rail 62 formed at the second slide member 60, a first guide member 70 formed at the first slide member 50 and inserted in the second guide rail 62 so as to be slidingly movable, and a second guide member 80 formed at the second slide member 60 and inserted in the first guide rail 52 so as to be slidingly movable.

The first guide rail 52 includes a horizontal rail 56 formed at an edge of the first slide member 50 in its horizontal direction, and a vertical rail 54 extended from one end of the horizontal rail 54 and formed at an edge of the first slide member 50 in its vertical direction.

The first guide rail 52 is perpendicularly extended from the edge of the first slide member 50 to thusly have a certain height and then the end of the extended portion is perpendicularly curved in an inner direction.

The second guide rail 62 includes a horizontal rail 66 formed at an edge of the second slide member 60 in its horizontal direction, and a vertical rail 64 formed at an edge of the second slide member 60 in its vertical direction. The second guide rail 62 has the same shape as that of the first guide rail 52.

The first guide member 70 is perpendicularly protruded from a surface of the first slide member 50, and the end of the protruded portion is perpendicularly curved in a direction of the edge of the first slide member 50.

The first guide member 70 is constituted with a horizontal member 74 formed in a horizontal direction of the first slide member 50, and a vertical member 72 extended from one end of the horizontal member 74 and formed in a vertical direction of the first slide member 50.

The second guide member 80 is constituted with a horizontal member 84 formed in a horizontal direction of the second slide member 60, and a vertical member 82 extended from one end of the horizontal member 84 and formed in a vertical direction of the second slide member 60.

The second guide member 80 has the same shape as that of the first guide member 70, and the curved points of the first and second guide members 70 and 80 are arranged to face each other in a diagonal direction thereof.

The first slide member 50 is provided with a supporting protrusion 86 for preventing the first slide member 50 from being moved in the vertical direction when the first slide member 50 is moved in the horizontal direction.

The supporting protrusion 86 is protruded at a portion spaced apart from the vertical member 72 of the first slide member 50 by a certain interval. Accordingly, when the first slide member 50 is slidingly moved in the horizontal direction, the supporting protrusion 86 is in contact with an outer surface of the horizontal rail 66 of the second slide member 60 to thusly prevent the second slide member 60 from being moved in the vertical direction.

The supporting protrusion 86 is arranged on the same straight line where the vertical member 72 of the first slide member 50 is positioned.

A path is formed in the horizontal rail 66 of the second slide member 60 such that the supporting protrusion 86 is passed through the path when the first slide member 50 is sliding moved in the vertical direction.

An operation of the slide module in accordance with the embodiment of the present invention having the construction will now be explained.

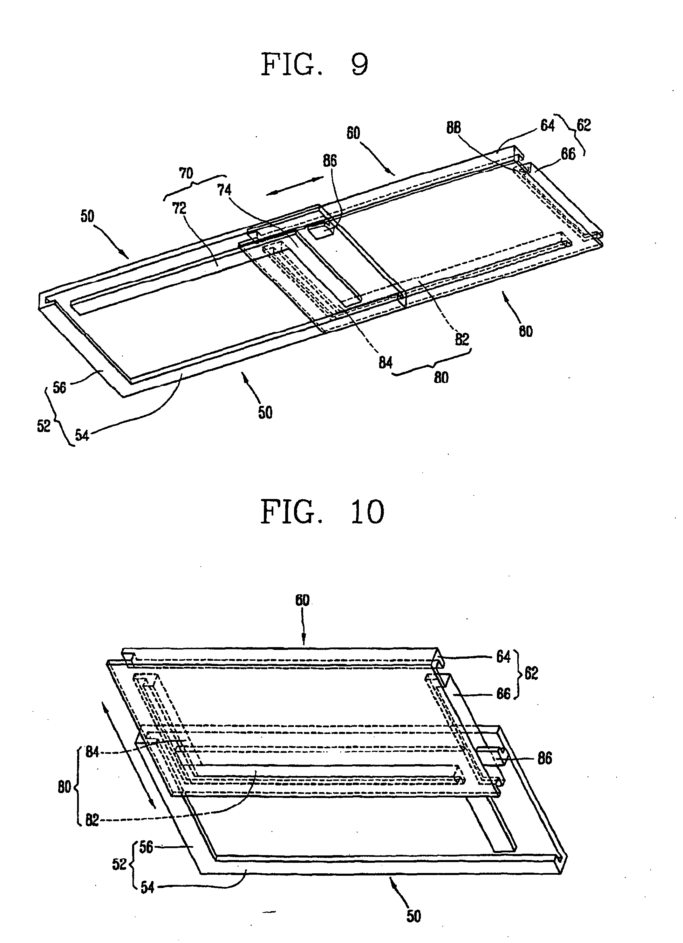

Fig. 9 is a perspective view illustrating a state that a slide module is moved in a vertical direction in accordance with the embodiment of the present invention, and Fig. 10 is a perspective view illustrating a state that a slide module is moved in a horizontal direction in accordance with the embodiment of the present invention.

First, when the first slide member 50 is moved relatively in the vertical direction with respect to the second slide member 60, the vertical rail 54 of the first guide rail 52 is slidingly moved in a state of being supported by the vertical member 82 of the second guide member 80, and the vertical rail 64 of the second guide rail 62 is slidingly moved in a state of being supported by the vertical member 72 of the first guide member 70. Accordingly, the first slide member 50 is guided to be slidingly moved in the vertical direction.

When the first slide member 50 is moved relatively in the horizontal direction with respect to the second slide member 60, the horizontal rail 56 of the first guide rail 52 is slidingly moved along the horizontal member 84 of the second guide member 80, and the horizontal member 72 of the first guide member 70 is slidingly moved along the horizontal rail 66 of the second guide rail 62. Here, the supporting protrusion 86 is supported by an outer surface of the horizontal rail 66 of the second slide member 60, and thereby prevents the second slide member 60 from being moved in the vertical direction. Accordingly, the first slide member 50 is guided to be moved in the horizontal direction.

As described above, the slide module according to the present invention is provided with the guide unit between the first and second slide members to thusly guide the first slide member to be moved in the horizontal and vertical directions, whereby the first body of the terminal can be moved in the horizontal and vertical direction, resulting in enlarging of an application range of the terminal.

## Claims

1. A slide module of a portable terminal comprising:
a first slide member (50) fixed to a first body (2);
a second slide member (60) fixed to a second body (6); and
a guide unit provided between the first slide member (50) and the second slide member (60), and configured to guide the first slide member (50) to be slidingly moved in vertical and horizontal directions, **characterized in that** the guide unit comprises:
a first guide rail (52) formed at the first slide member (50), and formed along two edges of the first slide member (50) in the horizontal and vertical directions;
a second guide rail (62) formed at the second slide member (60), and extending in the horizontal and vertical directions;
a first guide member (70) formed at the first slide member (50), formed along other edges of the first slide member in the horizontal and vertical directions, inserted in the second guide rail (62) and slidingly movable relative to the second guide rail (62); and
a second guide member (80) formed at the second slide member (60), extending in the horizontal and vertical directions, inserted in the first guide rail (52) and slidingly movable relative to the first guide rail (52).

2. The slide module of claim 1, wherein the first guide rail (52) and the second guide rail (62) are respectively formed at an edge of the horizontal direction of the first slide member (50) and an edge of a vertical direction of the second slide member (60).

3. The slide module of claim 1, wherein the first guide rail (52) and the second guide rail (62) are perpendicularly extended from respective edges of the first (50) and second (60) slide members, and ends of the extended portions are perpendicularly curved in an inner direction.

4. The slide module of claim 1, wherein the first guide member (70) and the second guide member (80) are formed at surfaces of the first slide member (50) and the second slide member (60) in the horizontal and vertical directions, respectively.

5. The slide module of claim 4, wherein the first guide member (70) and the second guide member (80) are perpendicularly protruded from the surfaces of the first slide member (50) and the second slide member (60), respectively, and ends of the protruded portions are perpendicularly curved in an edge directions.

6. The slide module of claim 4, wherein the first slide member (50) is provided with a supporting protrusion (86) to prevent the first slide member (50) from being moved in the vertical direction when the first slide member (50) is moved in the horizontal direction.

7. The slide module of claim 6, wherein the supporting protrusion (86) is formed at a portion spaced apart from a horizontal member (84) of the second guide member (80), and arranged on the same straight line where the vertical member (72) of the first guide member (70) is positioned.

## Patentansprüche

1. Gleitmodul eines tragbaren Endgeräts, das umfasst:
ein erstes Gleitelement (50), das an einem ersten Körper (2) befestigt ist;
ein zweites Gleitelement (60), das an einem zweiten Körper (6) befestigt ist; und
eine Führungseinheit, die zwischen dem ersten Gleitelement (50) und dem zweiten Gleitelement (60) vorgesehen ist und konfiguriert ist, das erste Gleitelement (50) zu führen, damit es gleitend in einer vertikalen und in einer horizontalen Richtung bewegt wird, **dadurch gekennzeichnet, dass** die Führungseinheit umfasst:
eine erste Führungsschiene (52), die an dem ersten Gleitelement (50) gebildet ist und entlang zweier Kanten des ersten Gleitelements (50) in der horizontalen und der vertikalen Richtung gebildet ist;
eine zweite Führungsschiene (62), die an dem zweiten Gleitelement (60) gebildet ist und sich in der horizontalen und der vertikalen Richtung erstreckt;
ein erstes Führungselement (70), das an dem ersten Gleitelement (50) gebildet ist, das entlang anderer Kanten des ersten Gleitelements in der horizontalen und der vertikalen Richtung gebildet ist, in die zweite Führungsschiene (62) eingefügt ist und bezüglich der zweiten Führungsschiene (62) gleitend beweglich ist; und
ein zweites Führungselement (80), das an dem zweiten Gleitelement (60) gebildet ist, sich in der horizontalen und der vertikalen Richtung erstreckt, in die erste Führungsschiene (52) eingefügt ist und bezüglich der ersten Führungsschiene (52) gleitend beweglich ist.

2. Gleitmodul nach Anspruch 1, wobei die erste Führungsschiene (52) und die zweite Führungsschiene (62) jeweils an einer Kante der horizontalen Richtung des ersten Gleitelements (50) und einer Kante einer vertikalen Richtung des zweiten Gleitelements (60) gebildet sind.

3. Gleitmodul nach Anspruch 1, wobei die erste Führungsschiene (52) und die zweite Führungsschiene (62) von jeweiligen Kanten des ersten (50) und des zweiten (60) Gleitelements senkrecht verlängert sind und die Enden der verlängerten Abschnitte in eine innere Richtung senkrecht gekrümmt sind.

4. Gleitmodul nach Anspruch 1, wobei das erste Führungselement (70) und das zweite Führungselement (80) an Flächen des ersten Gleitelements (50) und des zweiten Gleitelements (60) in der horizontalen bzw. der vertikalen Richtung gebildet sind.

5. Gleitmodul nach Anspruch 4, wobei das erste Führungselement (70) und das zweite Führungselement (80) jeweils senkrecht von den Flächen des ersten Gleitelements (50) und des zweiten Gleitelements (60) vorstehen und die Enden der vorstehenden Abschnitte in Kantenrichtungen senkrecht gekrümmt sind.

6. Gleitmodul nach Anspruch 4, wobei das erste Gleitelement (50) mit einem Stützvorsprung (86) versehen ist, um zu verhindern, dass das erste Gleitelement (50) in der vertikalen Richtung bewegt wird, wenn das erste Gleitelement (50) in der horizontalen Richtung bewegt wird.

7. Gleitmodul nach Anspruch 6, wobei der Stützvorsprung (86) an einem Abschnitt gebildet ist, der von einem horizontalen Element (84) des zweiten Führungselements (80) beabstandet ist und auf derselben geraden Linie angeordnet ist, auf der das vertikale Element (72) des ersten Führungselements (70) positioniert ist.

## Revendications

1. Module de coulissement d'un terminal portable comprenant :
un premier organe de coulissement (50) fixé à un premier corps (2) ;
un deuxième organe de coulissement (60) fixé à un deuxième corps (6) ; et
une unité de guidage fournie entre le premier organe de coulissement (50) et le deuxième organe de coulissement (60), et configurée pour guider le premier organe de coulissement (50) pour qu'il se déplace en coulissant dans un sens vertical et dans un sens horizontal, **caractérisé en ce que** l'unité de guidage comprend :
un premier rail de guidage (52) formé au premier organe de coulissement (50), et formé le long de deux bords du premier organe de coulissement (50) dans le sens horizontal et dans le sens vertical ;
un deuxième rail de guidage (62) formé au deuxième organe de coulissement (60), et s'étendant dans le sens horizontal et dans le sens vertical ;
un premier organe de guidage (70) formé au premier organe de coulissement (50), formé le long d'autres bords du premier organe de coulissement dans le sens vertical et dans le sens horizontal, inséré dans le deuxième rail de guidage (62) et pouvant se déplacer en coulissant par rapport au deuxième rail de guidage (62) ; et
un deuxième organe de guidage (80) formé au deuxième organe de coulissement (60), s'étendant dans le sens horizontal et dans le sens vertical, inséré dans le premier rail de guidage (52) et pouvant se déplacer en coulissant par rapport au premier rail de guidage (52).

2. Module de coulissement selon la revendication 1, dans lequel le premier rail de guidage (52) et le deuxième rail de guidage (62) sont respectivement formés à un bord du sens horizontal du premier organe de coulissement (50) et à un bord d'un sens vertical du deuxième organe de coulissement (60).

3. Module de coulissement selon la revendication 1, dans lequel le premier rail de guidage (52) et le deuxième rail de guidage (62) sont étendus perpendiculairement à partir de bords respectifs du premier organe de coulissement (50) et du deuxième organe de coulissement (60), et des extrémités des portions étendues sont incurvées perpendiculairement dans un sens vers l'intérieur.

4. Module de coulissement selon la revendication 1, dans lequel le premier organe de guidage (70) et le deuxième organe de guidage (80) sont respectivement formés à des surfaces du premier organe de coulissement (50) et du deuxième organe de coulissement (60) dans le sens horizontal et dans le sens vertical.

5. Module de coulissement selon la revendication 4, dans lequel le premier organe de guidage (70) et le deuxième organe de guidage (80) font respectivement saillie perpendiculairement à partir des surfaces du premier organe de coulissement (50) et du deuxième organe de coulissement (60), et des extrémités des portions faisant saillie sont incurvées perpendiculairement dans un sens vers le bord.

6. Module de coulissement selon la revendication 4, dans lequel le premier organe de coulissement (50) est pourvu d'une saillie de support (86) pour empêcher que le premier organe de coulissement (50) ne se déplace dans le sens vertical lorsque le premier organe de coulissement (50) est déplacé dans le sens horizontal.

7. Module de coulissement selon la revendication 6, dans lequel la saillie de support (86) est formée à une portion espacée d'un organe horizontal (84) du deuxième organe de guidage (80), et agencée sur la même ligne droite que celle sur laquelle est positionné l'organe vertical (72) du premier organe de guidage (70).
